# EUROPÄISCHE PATENTSCHRIFT

(11) **EP 2 598 310 B1**
(45) Veröffentlichungstag und Bekanntmachung des Hinweises auf die Patenterteilung: **09.09.2015**
(21) Anmeldenummer: 11771126.7
(22) Anmeldetag: 17.10.2011
(51) Int. Cl.: B29C 65/20, B29C 65/78, B29L 23/00

(54) **VERFAHREN UND VORRICHTUNG ZUM VERSCHWEISSEN VON ROHRABSCHNITTEN AUS KUNSTSTOFFEN ZU ROHREN**
METHOD AND DEVICE FOR WELDING PIPE SECTIONS MADE OF PLASTICS INTO PIPES
PROCÉDÉ ET DISPOSITIF POUR SOUDER DES SECTIONS TUBULAIRES EN MATIÈRES PLASTIQUES POUR FORMER DES TUBES

(30) Priorität: 15.10.2010 DE 102010048612
(43) Veröffentlichungstag der Anmeldung: 05.06.2013
(73) Patentinhaber: Rothenberger AG, 65779 Kelkheim (DE)
(72) Erfinder: AREND, Andreas, 37235 Hessisch Lichtenau (DE)
(74) Vertreter: Keil & Schaafhausen Patent- und Rechtsanwälte
(86) Internationale Anmeldenummer: PCT/EP2011/068093
(87) Internationale Veröffentlichungsnummer: WO 2012/049325

(56) Entgegenhaltungen:
- EP-A2- 0 852 995
- EP-A2- 1 719 606
- DE-U1-202006 003 138
- FR-A1- 2 762 540
- US-A- 4 352 708
- US-A- 5 013 376
- US-A- 5 620 625
- US-A- 5 743 992
- US-A- 5 814 182
- US-A1- 2004 251 575

## Beschreibung

Die Erfindung betrifft ein Verfahren zum Verschweißen von Rohrabschnitten aus Kunststoffen zu Rohren mittels folgender Aggregate:
a) einer Schweißvorrichtung, die ein Grundgestell mit vier geteilten Spannringen aufweist, die zwei Gruppen bilden, von denen jede einen Rohrabschnitt aufnimmt und von denen eine Gruppe auf Führungen aus einem anfänglichen Abstand durch einen Antrieb gegen die andere Gruppe verschiebbar ist,
b) einem Hydraulikaggregat für die Betätigung des Antriebs der Schweißvorrichtung,
c) einer Fräsvorrichtung zum radialen Planfräsen der Schweißflächen der Rohrabschnitte, die in den anfänglichen Abstand zwischen den Rohrabschnitten einführbar ist, und
d) einer zweiseitigen Heizvorrichtung, die nach dem Fräsen in den Abstand zwischen den Rohrabschnitten einführbar und durch den hydraulischen Antrieb in gleichmäßigen Kontakt mit den Rohrabschnitten bringbar ist, wobei
e) Produkt-, Maschinen-, Umwelt-, Zeit- und hydraulische Daten in ein vernetztes Steuergerät eingegeben werden.

### Der Stand der Technik:

Die vorstehend beschriebenen Verfahren und Vorrichtungen hierfür sind durch den Stand der Technik unter dem Begriff "Rohr-Stumpfschweißen" bekannt. Bei vorzeitiger Entnahme des Rohres und vorzeitiger Entlastung der Schweißnaht vor dem vollständigen Erstarren der Rohrverbindung rutschen die zwei angetriebenen Spannringe auf dem Rohr durch. Dies wird dann irreführend als "Rohrentnahme" interpretiert. Ein Nichteinhalten der geforderten Prozessparameter kann fatale Folgen für die Qualität der Schweißverbindung haben. Besonders bei Gas- und/oder Chemikalienleitungen würde eine frühzeitig ausfallende Schweißnaht eine Umweltkatastrophe auslösen. Hierbei spielt insbesondere die lange Abkühldauer der Schweißverbindung eine Rolle, die je nach Werkstoff und Abmessungen zwischen 6 und 80 Minuten liegen kann. Man bedenke, dass mit der gleichen Vorrichtung Rohre mit Durchmessern zwischen beispielhaft 160 und 630 mm verarbeitet werden können. Dies ermöglicht ein versehentliches oder willkürliches Manipulieren an der Schweißvorrichtung.

Bei bekannten Verfahren nach dem CNC-System werden Daten durch eine Vielzahl von Adern, Steckern und Kontakten übertragen, was wiederum zu Fehlern bei der Bedienung und/oder Fehlfunktionen der Maschinen-Komponenten führen kann. Bei den bekannten Lösungen wird auch häufig die Heizvorrichtung ununterbrochen auf einer Betriebstemperatur von beispielsweise 220 °C gehalten. Die Einsatzdauer während eines Schweißprozesses beträgt aber nur ca. 12 bis 14%. Dies führt bei Anschlussleistungen zwischen 1500 und 8000 Watt (je nach Durchmesser) zu ganz enormen Energieverlusten und damit auch Umweltbelastungen. Auch die Fräsvorrichtung kann durch einen nicht erkannten und zu hohen hydraulischen Druck an die Rohrenden herangeschoben werden, was wiederum nicht nur zur Energieverschwendung sondern auch zu Schäden an den Fräsern führen kann.

Die US 5,814,182 A beschreibt eine Vorrichtung zum Schweißen von Polyolefinrohren. An einem Rahmen sind erste und zweite Backen zum Greifen von Rohren vorgesehen, wobei die zweiten Backen relativ zu den ersten Backen verfahrbar sind. Eine Trimmvorrichtung wird zwischen die Rohrenden gesetzt, um deren Enden zu bearbeiten. Anschließend wird eine Heizvorrichtung zwischen die Rohrenden gebracht, um die Enden unter Hitze und Druck aufzuschmelzen. Danach werden die Rohrenden unter hohem Druck gegeneinander gedrückt. Nach Ablauf eines Timers werden die Backen geöffnet, so dass das hergestellte Rohr aus den Backen entfernt werden kann. Ein Mikroprozessor überwacht kontinuierlich Druck und Temperatur während des Schweißprozess, um bei einer Störung den Zyklus zu unterbrechen.

### Aufgabenstellung:

Der Erfindung liegt die Aufgabe zugrunde, ein Verfahren und eine Vorrichtung anzugeben, durch die die Lage von Werkstücken in der Schweißvorrichtung ebenso wie eine vorzeitige Entnahme aus dieser zuverlässig erkannt werden und eine Überlistung durch eine Fehlermeldung angezeigt wird. Weiterhin sollen die für den Schweißvorgang wesentlichen Parameter wie Geometrie, Geschwindigkeit, Zeit und Temperatur erfasst und die Übertragungsqualität trotz Reduzierung der Leitungen und Kontakte gesteigert werden. Aus Gründen der Umweltschonung, Bauund Betriebskosten sollen ferner Betriebspausen und Leistungsspitzen zeitlich genauer aufeinander abgestimmt werden, so dass auch die Summe der Stromaufnahmen aus allen Aggregaten und hydraulische Drücke im Antrieb reduziert und/oder unterschiedlichem Leistungsbedarf angepasst werden kann. Im Ergebnis geht es vor allem um eine Steigerung der Arbeitsgeschwindigkeit, der Qualität und Zuverlässigkeit der Endprodukte und damit der Sicherheit.

### Die Lösung der gestellten Aufgabe:

Die der Erfindung zugrunde liegende Aufgabe wird durch ein Verfahren mit den Merkmalen des Anspruchs 1 sowie durch eine Vorrichtung mit den Merkmalen des Anspruchs 7 gelöst.

Die Lösung umfasst bei dem eingangs angegebenen Verfahren, dass die verfahrensspezifischen Daten für den Schweißvorgang als Sollwerte und gemessene Verfahrensparameter aus den vorstehenden Aggregaten a), b), c) und d) derart nach Zeit und Größe in das Steuergerät eingespeichert werden, dass die Funktionen der genannten Aggregate nach Vergleich mit den vorgegebenen Sollwerten korreliert und angezeigt werden.

### Die Vorteile der Erfindung:

Diese bestehen darin, dass die Lage von Werkstücken in der Schweißvorrichtung ebenso wie eine vorzeitige Entnahme aus dieser zuverlässig erkannt werden und eine Überlistung durch eine Fehlermeldung angezeigt wird. Weiterhin werden die für den Schweißvorgang wesentlichen Parameter wie Geometrie, Geschwindigkeit, Zeit und Temperatur erfasst und die Übertragungsqualität trotz Reduzierung der Leitungen und Kontakte gesteigert. Aus Gründen der Umweltschonung, der Bau- und Betriebskosten werden ferner Betriebspausen und Leistungsspitzen zeitlich genauer aufeinander abgestimmt, so dass auch die Summe der Stromaufnahmen aus allen Aggregaten und hydraulische Drücke im Antrieb reduziert und/oder unterschiedlichem Leistungsbedarf angepasst werden. Im Ergebnis wird vor allem eine Steigerung der Arbeitsgeschwindigkeit, der Qualität und Zuverlässigkeit der Endprodukte und damit der Sicherheit erreicht.

Die Erfindung führt im Prinzip zu einer Integration aller verfahrenswesentlichen Funktionen und deren Parametern bei der Herstellung von Rohrverbindungen durch Stumpfschweißen.

Es ist im Zuge weiterer Ausgestaltungen des Verfahrens besonders vorteilhaft, wenn - entweder einzeln oder in Kombination -:
- die Größe des Abstandes in einem Protokollspeicher gespeichert wird,
- die Rohrgeometrie durch den mindestens einen Entfernungssensor überwacht wird,
- durch Sensoren und Speicherplätze folgende Parameter zusätzlich erfasst werden: Umgebungstemperatur, Position des Hydraulikantriebs, Rohrdurchmesser, und Bewegungsgeschwindigkeit der Spannringe,
- die Schweißvorrichtung mit einem A/D-Wandler versehen ist, über den die Verfahrensparameter an das Steuergerät übertragen werden,
- die Heizleistung für die Heizvorrichtung während der Abkühlzeit der Schweißverbindung unterbrochen wird,
- die Heizleistung für die Heizvorrichtung während der Fräsdauer in der Schweißverbindung unterbrochen wird,
- der Druck im hydraulischen Antriebssystem während des Fräsvorgangs beim Zusammenfahren der Rohrabschnitte auf einen Druck unterhalb des Schweißdrucks reduziert wird, und/oder, wenn
- die Verschiebung der beweglichen Spannringe durch Zylinder herbeigeführt wird, die jeweils zwischen zwei Führungen für die Kolbenstange angeordnet sind und je einen Kolben umschließen, der je nach Bewegungsrichtung über jeweils einen der Hydraulikanschlüsse mit Hydraulikflüssigkeit versorgt wird.

Die Erfindung betrifft auch eine Vorrichtung zum Verschweißen von Rohrabschnitten aus Kunststoffen zu Rohren mittels folgender Aggregate:
a) einer Schweißvorrichtung, die ein Grundgestell mit vier geteilte Spannringen aufweist, die zwei Gruppen bilden von denen jede eine Rohrabschnitt aufnimmt und von denen eine Gruppe auf Führungen aus einem anfänglichen Abstand durch einen Antrieb gegen die andere verschiebbar ist,
b) einem Hydraulikaggregat für die Betätigung des Antriebs der Schweißvorrichtung,
c) einer Fräsvorrichtung zum radialen Planfräsen der Schweißflächen der Rohrabschnitte, die in den anfänglichen Abstand zwischen den Rohrabschnitten einführbar ist, und
d) einer zweiseitigen Heizvorrichtung, die nach dem Fräsen in den Abstand zwischen den Rohrabschnitten einführbar und durch den hydraulischen Antrieb in gleichmäßigen Kontakt mit den Rohrabschnitten bringbar ist, wobei
e) Produkt-, Maschinen-, Umwelt-, Zeit- und hydraulische Daten in ein vernetztes Steuergerät einbringbar sind.

Zur Lösung der gleichen Aufgabe und Erzielung der gleichen Vorteile ist eine solche Vorrichtung erfindungsgemäß dadurch gekennzeichnet, dass
die verfahrensspezifischen Daten für den Schweißvorgang als Sollwerte und gemessene Vorrichtungsparameter aus den vorstehenden Aggregaten a), b), c) und d) derart nach Zeit und Größe in das Steuergerät einspeicherbar sind, dass die Funktionen der genannten Aggregate nach Vergleich mit den vorgegebenen Sollwerten korreliert und angezeigt werden.

Es ist im Zuge weiterer Ausgestaltungen der Vorrichtung besonders vorteilhaft, wenn - entweder einzeln oder in Kombination -:
- die Größe des Abstandes in einem Protokollspeicher speicherbar ist,
- die Rohrgeometrie durch den mindestens einen Entfernungssensor erfassbar ist,
- durch Sensoren und Speicherplätze folgende Parameter zusätzlich erfassbar und speicherbar sind: Umgebungstemperatur, Position des Hydraulikantriebs, Rohrdurchmesser, und Bewegungsgeschwindigkeit der Spannringe,
- die Schweißvorrichtung mit einem A/D-Wandler versehen ist, über den die Vorrichtungsparameter an das Steuergerät übertragbar sind,
- die Heizleistung für die Heizvorrichtung während der Abkühlzeit der Schweißverbindung abschaltbar ist,
- die Heizleistung für die Heizvorrichtung während der Fräsdauer in der Schweißverbindung abschaltbar ist,
- der Druck im hydraulischen Antriebssystem während des Fräsvorgangs beim Zusammenfahren der Rohrabschnitte auf einen Druck unterhalb des Schweißdrucks reduzierbar ist, und/oder, wenn
- die Verschiebung der beweglichen Spannringe durch Zylinder herbeiführbar ist, die zwischen zwei Führungen für die Kolbenstange angeordnet sind und je einen Kolben umschließen, der je nach Bewegungsrichtung über jeweils einen der Hydraulikanschlüsse mit Hydraulikflüssigkeit versorgbar ist.

### Detailbeschreibung:

Ausführungsbeispiele des Erfindungsgegenstandes und deren Wirkungsweisen und weitere Vorteile werden nachfolgend anhand der Figuren 1 bis 7 näher erläutert.

Es zeigen:
- Figur 1: ein Blockdiagramm der funktionellen Vernetzung der Aggregate Steuergerät, Schweißvorrichtung und Hydraulikgenerator,
- Figur 2: eine Ausschnittvergrößerung des Kreises A in Figur 1,
- Figur 3: eine axiale Draufsicht auf eine Fräsvorrichtung zum Planfräsen der Schweißflächen,
- Figur 4: eine Seitenansicht des Gegenstandes von Figur 3,
- Figur 5: einen teilweisen Axialschnitt durch die Schweißvorrichtung.
- Figur 6: eine Seitenansicht analog Figur 5, mit Blick auf die Kolbenstange und den Zylinderantrieb, und
- Figur 7: einen Vertikalschnitt durch den rechten Teil von Figur 6 in vergrößertem Maßstab.

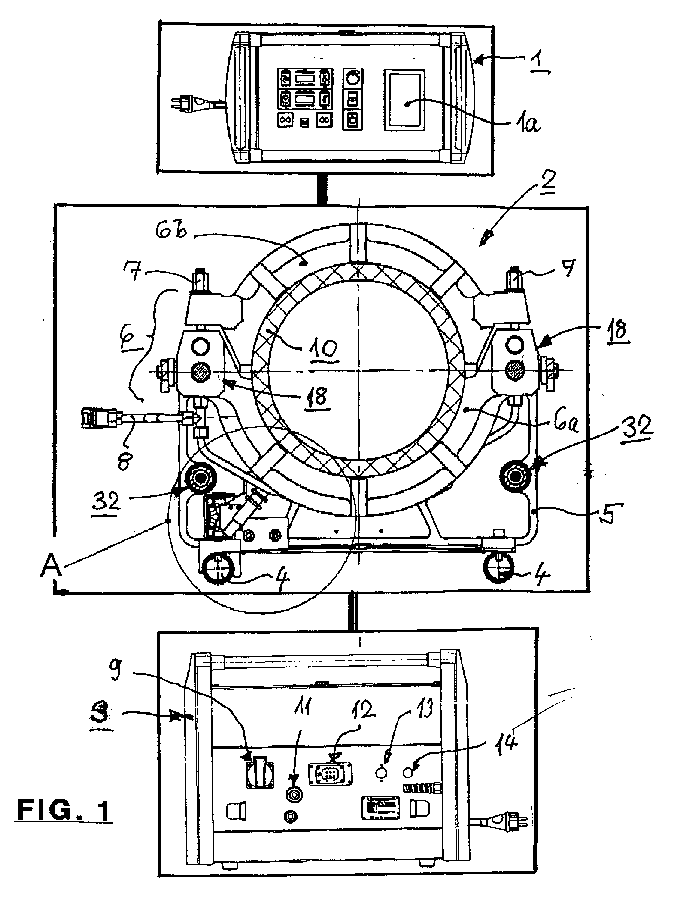

In Figur 1 ist oben eine Draufsicht auf die Bedienerseite des Steuergeräts 1 mit einem Protokollspeicher 1a zur Datenverarbeitung gezeigt, in der Mitte ein Radialschnitt durch die Schweißvorrichtung 2 und unten eine Seitenansicht des Hydraulikgenerators 3.

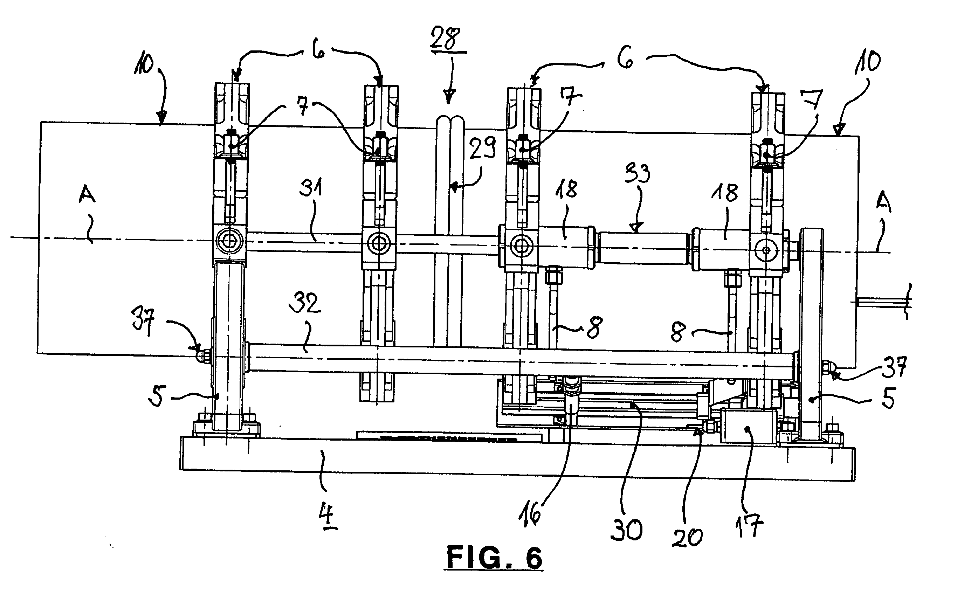

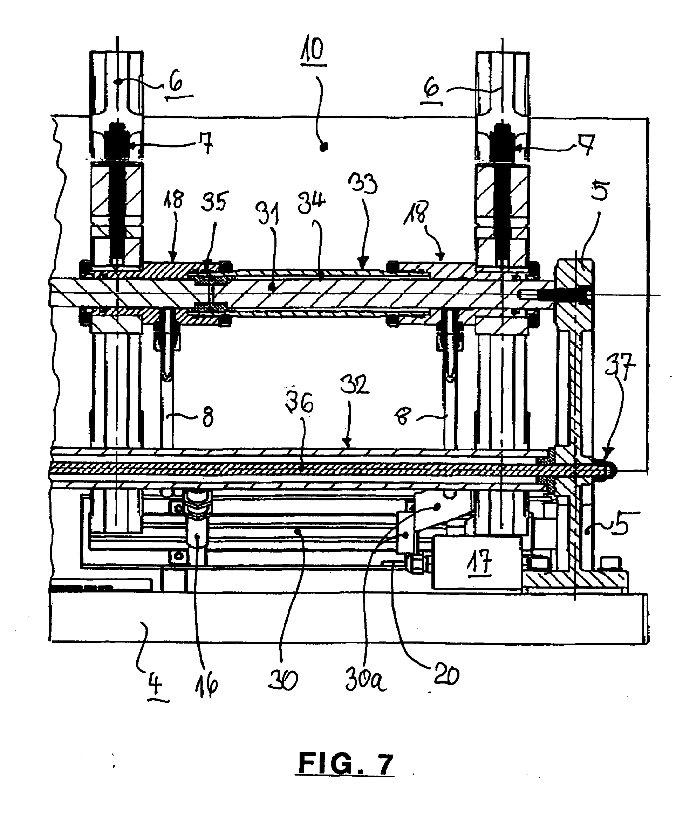

Die Schweißvorrichtung 2 besitzt zwei parallele Kufen 4, die durch Querträger 5 und Distanzrohre 32 miteinander zu einem Rahmen verbunden sind (siehe auch die Figuren 6 und 7). Dieser Rahmen trägt vier senkrechte und diagonal geteilte Spannringe 6, jeweils bestehend aus einem Unterteil 6a und einem Oberteil 6b. Diese Teile sind durch Spannschrauben 7 so verspannbar, dass ihre Innenflächen in jeweils einer Zylinderfläche liegen. Ein Hydraulikanschluss 8 dient zur Verbindung mit dem Hydraulikgenerator 3. Einer der eingespannten Rohrabschnitte ist mit 10 bezeichnet.

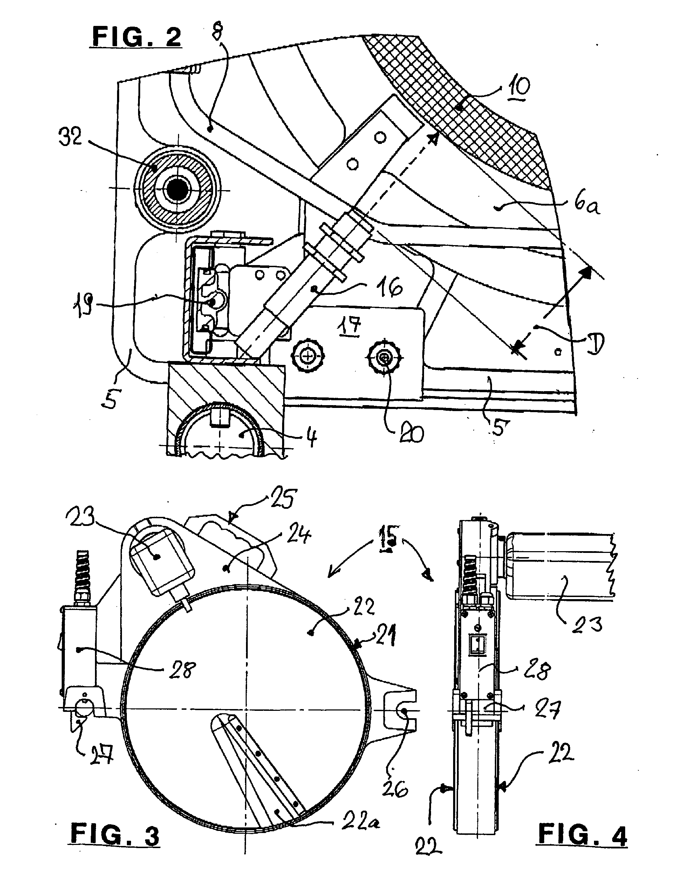

Der Hydraulikgenerator 3 besitzt u.a. einen Schalter 9 für die Betätigung der Fräsvorrichtung 15 (Figuren 3 und 4), zwei Anschlüsse 11 für die Hydrauliksteuerung der Schweißvorrichtung 2, eine Steckverbindung 12 für das hier nicht dargestellte Heizelement in der Schweißvorrichtung 2, einen Anschluss 13 für einen A/D-Wandler für die Schweißvorrichtung 2 und einen Anschluss 14 für einen USB-Speicherstick zum Speichern der hierfür relevanten Daten. Die Aggregate und Komponenten haben eigene Stromanschlüsse, was durch Stecker angedeutet ist.

Die Figur 2 zeigt in einer Ausschnittvergrößerung des Kreises A in Figur 1 unter Beibehaltung und Fortschreibung der bisherigen Bezifferung folgende Details: Ein Entfernungssensor 16 misst den Abstand D zum Rohr bzw. Rohrabschnitt 10. Der Messwert wird in einem A/D-Wandler 17 mit Speicher gespeichert. Solange wie dieses Rohr 10 durch feste Einspannung im Spannring 6 in einer zylindrischen Fläche liegt, erfolgt keine Warnung. Würde jedoch der zugehörige Spannring 6 unzulässig geöffnet, so verformt sich das Rohr 10 und ändert sich der Abstand D unter Abheben vom Spannring 6.

Die Schweißvorrichtung besitzt ferner zwei gegenüberliegende rohrförmige Führungen 18 für die hydraulische Verschiebung der beweglichen Spannringe, was anhand der Figuren 6 und 7 noch näher erläutert wird. Für die Messung und Speicherung des Verfahrweges besitzt die Vorrichtung ferner ein sogenanntes Wegmess-System 19, dessen Messsignale gleichfalls abrufbar gespeichert werden. Schließlich ist der A/D-Wandler 17 noch mit einem Temperatur-Sensor 20 für die Messung der Umgebungstemperatur versehen, denn diese kann wiederum die Aufheiz- und Abkühlungsgeschwindigkeit der Schweißnaht bestimmen.

Die Figuren 3 und 4 zeigen die doppelseitige Fräsvorrichtung 15 zum Planfräsen der Schweißflächen vor deren Aufheizen. Zwei drehbare Frässcheiben 22 mit je einem etwa radialen Spalt 22a, von dem eine Seite mit einem Messer versehen ist und der zur Späneabfuhr dient, wird durch einen Zahnkranz 21 und einen Motor 23 angetrieben. Die Befestigung erfolgt an einem Träger 24 mit einem Handgriff 25, so dass die komplette Fräsvorrichung 15 in den anfänglich vorhandenen Abstand zwischen den beiden Rohrabschnitten 10 eingesetzt werden kann. Die genaue und auswechselbare Positionierung erfolgt durch formschlüssige Kupplungselemente 26 und 27, was wiederum durch einen Sensor 28 überwacht wird.

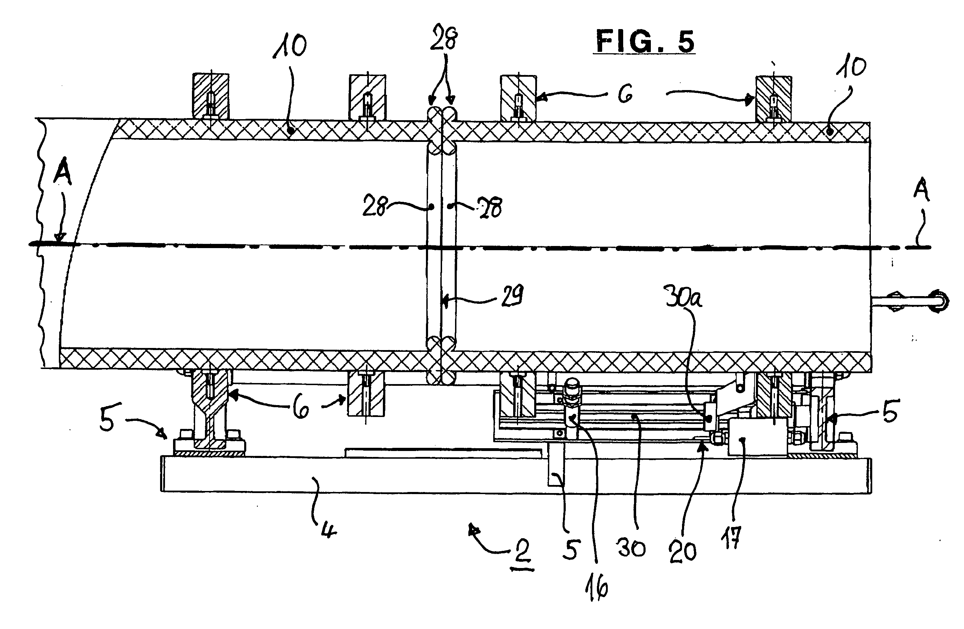

Die Figur 5 zeigt unter Beibehaltung und Fortschreibung der bisherigen Bezifferung einen teilweisen Axialschnitt durch die Schweißvorrichtung 2. Zwei Rohrabschnitte 10 sind koaxial zu einer Systemachse A-A ausgerichtet und werden von den Spannringen 6 gemäß Figur 1, Mitte, gehalten. Vorausgegangen sind das Planfräsen der Schweißflächen, deren Erhitzung auf Schweißtemperatur und das Zusammenschieben unter Bildung der beiden Schweißwülste 28. Durch den axialen Anpressdruck verschmelzen die beiden Schweißwülste 28 und die bis dahin vorhandenen Schweißfuge 29 verschwindet. Unter den beiden rechts dargestellten Spannringen 6 befinden sich - wie bereits beschrieben - der Entfernungssensor 16 und der Temperatur-Sensor 20, ferner aber auch ein stationäres Wegmess-System 30 mit einem beweglichen Sensor 30a für die Bestimmung und Speicherung der einzelnen Wegabschnitte vor und während der Verschweißung. Ferner befindet sich dort auch der A/D-Wandler 17 für die Speicherung der Messdaten sowie der Seriennummer, der Zylinderfläche etc., die von außen eingegeben werden.

Die Figur 6 zeigt unter Beibehaltung und Fortschreibung der bisherigen Bezifferung eine Seitenansicht analog Figur 5 und einen Blick auf eine der Kolbenstangen 31 in den Führungen 18 und eines der Distanzrohre 32 zwischen den Querträgern 5.

Gemäß Figur 7 ist die Kolbenstange 31 durch die beiden Führungen 18 hindurchgeführt, die zwischen sich - an beiden Enden abgedichtet und befestigt - einen Zylinder 33 mit einem Spaltraum 34 einschließen, Dieser Spaltraum 34 enthält einen ringförmigen Kolben 35 und ist beidendig an die Hydraulikanschlüsse 8 angeschlossen. Durch die alternative Versorgung von dem Hydraulikgenerator 3 (Figur 1) sind die beiden rechten Spannringe 6 in der jeweils gewünschten Richtung gemeinsam verfahrbar. Das Distanzrohr 32 umschließt konzentrisch einen Zuganker 36, der aus je einer Gewindestange besteht und durch Spannmuttern 37 verspannt wird. Dadurch, durch die Querträger 5 und die Kufen 4 wird ein außerordentlich stabiles Grundgestell gebildet, das inneren und äußeren Kräften standhält.

### Bezugszeichenliste:

- 1: Steuergerät
- 1a: Speicherprotokoll
- 2: Schweißvorrichtung
- 3: Hydraulikgenerator
- 4: Kufen
- 5: Querträger
- 6: Spannringe
- 6a: Unterteil
- 6b: Oberteil
- 7: Spannschrauben
- 8: Hydraulikanschluss
- 9: Schalter
- 10: Rohrabschnitt
- 11: Anschluss
- 12: Steckverbindung
- 13: Anschluss
- 14: Anschluss
- 15: Fräsvorrichtung
- 16: Entfernungssensor
- 17: A/D-Wandler
- 18: Führungen
- 19: Wegmess-System
- 20: Temperatur-Sensor
- 21: Zahnkranz
- 22: Frässcheibe
- 22a: Spalt
- 23: Motor
- 24: Träger
- 25: Handgriff
- 26: Kupplungselement
- 27: Kupplungelement
- 28: Schweißwülste
- 29: Schweißfuge
- 30: Wegmess-System
- 30a: Sensor
- 31: Kolbenstange
- 32: Distanzrohre
- 33: Zylinder
- 34: Spaltraum
- 35: Kolben
- 36: Zuganker
- 37: Spannmuttern

- A-A: Systemachse
- D: Abstand

## Patentansprüche

1. Verfahren zum Verschweißen von Rohrabschnitten (10) aus Kunststoffen zu Rohren mittels folgender Aggregate:
a) einer Schweißvorrichtung (2), die ein Grundgestell mit vier geteilten Spannringen (6) aufweist, die zwei Gruppen bilden von denen jede einen Rohrabschnitt (10) aufnimmt und von denen eine Gruppe auf Führungen (18) aus einem anfänglichen Abstand durch einen Antrieb gegen die andere verschiebbar ist,
b) einem Hydraulikaggregat (3) für die Betätigung des Antriebs der Schweißvorrichtung (2),
c) einer Fräsvorrichtung (15) zum radialen Planfräsen der Schweißflächen der Rohrabschnitte (10), die in den anfänglichen Abstand zwischen den Rohrabschnitten (10) einführbar ist, und
d) einer zweiseitigen Heizvorrichtung, die nach dem Fräsen in den Abstand zwischen den Rohrabschnitten (10) einführbar und durch den hydraulischen Antrieb in gleichmäßigen Kontakt mit den Rohrabschnitten (10) bringbar ist, wobei
e) Produkt-, Maschinen-, Umwelt-, Zeit- und hydraulische Daten in ein vernetztes Steuergerät (1) eingegeben werden,
wobei die verfahrensspezifischen Daten für den Schweißvorgang als Sollwerte und gemessene Verfahrensparameter aus den vorstehenden Aggregaten a), b), c) und d) derart nach Zeit und Größe in das Steuergerät (1) eingespeichert werden, dass die Funktionen der genannten Aggregate nach Vergleich mit den vorgegebenen Sollwerten korreliert und angezeigt werden.
**dadurch gekennzeichnet, dass** die Lage mindestens eines Rohrabschnitts (10) in einem der Spannringe (6) durch mindestens einen Entfernungssensor (16) überwacht wird, wobei vorzugsweise die Größe des Abstandes in einem Protokollspeicher gespeichert wird und/oder wobei vorzugsweise die Rohrgeometrie durch den mindestens einen Entfernungssensor (16) überwacht wird.

2. Verfahren nach Anspruch 1, **dadurch gekennzeichnet, dass** durch Sensoren und Speicherplätze folgende Parameter zusätzlich erfasst werden: Umgebungstemperatur, Position des Hydraulikantriebs, Rohrdurchmesser, und Bewegungsgeschwindigkeit der Spannringe (6).

3. Verfahren nach Anspruch 1, **dadurch gekennzeichnet, dass** die Schweißvorrichtung (2) mit einem A/D-Wandler (17) versehen ist, über den die Verfahrensparameter an das Steuergerät (1) übertragen werden.

4. Verfahren nach Anspruch 1, **dadurch gekennzeichnet, dass** die Heizleistung für die Heizvorrichtung während der Abkühlzeit der Schweißverbindung und/oder während der Fräsdauer In der Schweißvorrichtung (2) unterbrochen wird.

5. Verfahren nach Anspruch 1, **dadurch gekennzeichnet, dass** der Druck im hydraulischen Antriebssystem während des Fräsvorgangs beim Zusammenfahren der Rohrabschnitte (10) auf einen Druck unterhalb des Schweißdrucks reduziert wird.

6. Verfahren nach Anspruch 1, **dadurch gekennzeichnet, dass** die Verschiebung der beweglichen Spannringe (6) durch Zylinder (33) herbeigeführt wird, die jeweils zwischen zwei Führungen (18) für die Kolbenstange (31) angeordnet sind und je einen Kolben (35) umschließen, der je nach Bewegungsrichtung über jeweils einen der Hydraulikanschlüsse (8) mit Hydraulikflüssigkeit versorgt wird.

7. Vorrichtung zum Verschweißen von Rohrabschnitten (10) aus Kunststoffen zu Rohren mittels folgender Aggregate:
a) einer Schweißvorrichtung (2), die ein Grundgestell mit vier geteilten Spannringen (6) aufweist, die zwei Gruppen bilden von denen jede einen Rohrabschnitt (10) aufnimmt und von denen eine Gruppe auf Führungen (18) aus einem anfänglichen Abstand durch einen Antrieb gegen die andere verschiebbar ist,
b) einem Hydraulikaggregat (3) für die Betätigung des Antriebs der Schweißvorrichtung (2),
c) einer Fräsvorrichtung (21) zum radialen Planfräsen der Schweißflächen der Rohrabschnitte (10), die in den anfänglichen Abstand zwischen den Rohrabschnitten (10) einführbar ist, und
d) einer zweiseitigen Heizvorrichtung, die nach dem Fräsen in den Abstand zwischen den Rohrabschnitten (10) einführbar und durch den hydraulischen Antrieb in gleichmäßigen Kontakt mit den Rohrabschnitten (10) bringbar ist, wobei
e) Produkt-,Maschinen-, Umwelt-, Zeit- und hydraulische Daten in ein vernetztes Steuergerät (1) einbringbar sind,
wobei die verfahrensspezifischen Daten für den Schweißvorgang als Sollwerte und gemessene Vorrichtungsparameter aus den vorstehenden Aggregaten a), b), c) und d) derart nach Zeit und Größe in das Steuergerät (1) einspeicherbar sind, dass die Funktionen der genannten Aggregate nach Vergleich mit den vorgegebenen Sollwerten korreliert und angezeigt werden,
**dadurch gekennzeichnet, dass** an mindestens einem der Spannringe (6) ein Entfernungssensor (16) angeordnet ist, wobei vorzugsweise die Größe des Abstandes In einem Protokollspeicher speicherbar ist und/oder wobei vorzugsweise die Rohrgeometrie durch den mindestens einen Entfernungssensor (16) erfassbar ist.

8. Vorrichtung nach Anspruch 7, **dadurch gekennzeichnet, dass** durch Sensoren und Speicherplätze folgende Parameter zusätzlich erfassbar und speicherbar sind: Umgebungstemperatur, Position des Hydraulikantriebs, Rohrdurchmesser, und Bewegungsgeschwindigkeit der Spannringe (6).

9. Vorrichtung nach Anspruch 7, **dadurch gekennzeichnet, dass** die Schweißvorrichtung (2) mit einem A/D-Wandler (17) versehen ist, über den die Vorrichtungsparameter an das Steuergerät (1) übertragbar sind.

10. Vorrichtung nach Anspruch 7, **dadurch gekennzeichnet, dass** die Heizleistung für die Heizvorrichtung während der Abkühlzeit der Schweißverbindung abschaltbar ist und/oder während der Fräsdauer in der Schweißvorrichtung (2) unterbrechbar ist.

11. Vorrichtung nach Anspruch 7, **dadurch gekennzeichnet, dass** der Druck im hydraulischen Antriebssystem während des Fräsvorgangs beim Zusammenfahren der Rohrabschnitte (10) auf einen Druck unterhalb des Schweißdrucks reduzierbar ist.

12. Vorrichtung nach Anspruch 7, **dadurch gekennzeichnet, dass** die Verschiebung der beweglichen Spannringe (6) durch Zylinder (33) herbeiführbar ist, die jeweils zwischen zwei Führungen (18) für die Kolbenstange (31) angeordnet sind und je einen Kolben (35) umschließen, der je nach Bewegungsrichtung über jeweils einen der Hydraulikanschlüsse (8) mit Hydraulikflüssigkeit versorgbar ist.

## Claims

1. A method for welding pipe sections (10) made of plastics into pipes by means of the following units:
a) a welding device (2) featuring a base frame with four divided clamping rings (6) that form two groups, each of which receives a pipe section (10), wherein one group can be displaced on guides (18) relative to the other group from an initial clearance by means of a drive,
b) a hydraulic unit (3) for the actuation of the drive of the welding device (2),
c) a milling device (15) for radially face-milling the welding surfaces of the pipe sections (10), wherein said milling device can be inserted into the initial clearance between the pipe sections (10), and
d) a two-sided heating device that can be inserted into the clearance between the pipe sections (10) after the milling operation and brought into uniform contact with the pipe sections (10) by the hydraulic drive, wherein
e) product data, machine data, environmental data, time data and hydraulic data is input into a networked control device (1), and
wherein the process-specific data for the welding process is stored in the form of nominal values and measured process parameters of the above-cited units a), b), c) and d) are stored in the control device (1) according to time and dimension in such a way that the functions of the cited units correlate after comparison with the predefined nominal values and are displayed,
**characterized in that** the position of at least one pipe section (10) in one of the clamping rings (6) is monitored by at least one distance sensor (16), wherein the dimension of the clearance is preferably stored in a protocol memory and/or wherein the pipe geometry is preferably monitored by the at least one distance sensor (16).

2. The method according to claim 1, **characterized in that** the following parameters are additionally acquired by means of sensors and storage locations: the ambient temperature, the position of the hydraulic drive, the pipe diameter and the moving speed of the clamping rings (6).

3. The method according to claim 1, **characterized in that** the welding device (2) is provided with an A/D converter (17), by means of which the process parameters are transmitted to the control device (1).

4. The method according to claim 1, **characterized in that** the heating power of the heating device is interrupted during the cooling period of the welded joint and/or during the milling period in the welding device (2).

5. The method according to claim 1, **characterized in that** the pressure in the hydraulic drive system is during the milling operation reduced to a pressure below the welding pressure when the pipe sections (10) are moved together.

6. The method according to claim 1, **characterized in that** the displacement of the movable clamping rings (6) is effected by cylinders (33) that are respectively arranged between two guides (18) for the piston rod (31) and each enclose a piston (35) that is respectively supplied with hydraulic fluid through one of the hydraulic connections (8) depending on the moving direction.

7. A device for welding pipe sections (10) made of plastics into pipes by means of the following units:
a) a welding device (2) featuring a base frame with four divided clamping rings (6) that form two groups, each of which receives a pipe section (10), wherein one group can be displaced on guides (18) relative to the other group from an initial clearance by means of a drive,
b) a hydraulic unit (3) for the actuation of the drive of the welding device (2),
c) a milling device (21) for radially face-milling the welding surfaces of the pipe sections (10), wherein said milling device can be inserted into the initial clearance between the pipe sections (10), and
d) a two-sided heating device that can be inserted into the clearance between the pipe sections (10) after the milling operation brought into uniform contact with the pipe sections (10) by the hydraulic drive, wherein
e) product data, machine data, environmental data, time data and hydraulic data can be input into a networked control device (1), and
wherein the process-specific data for the welding process can be stored in the form of nominal values and measured process parameters of the above-cited units a), b), c) and d) can be stored in the control device (1) according to time and dimension in such a way that the functions of the cited units correlate after comparison with the predefined nominal values and are displayed,
**characterized in that** a distance sensor (16) is arranged on at least one of the clamping rings (6), wherein the dimension of the clearance preferably can be stored in a protocol memory and/or wherein the pipe geometry preferably can be measured by the at least one distance sensor (16).

8. The device according to claim 7, **characterized in that** the following parameters can be additionally acquired and stored by means of sensors and storage locations: the ambient temperature, the position of the hydraulic drive, the pipe diameter and the moving speed of the clamping rings (6).

9. The device according to claim 7, **characterized in that** the welding device (2) is provided with an A/D converter (17), by means of which the device parameters can be transmitted to the control device (1).

10. The device according to claim 7, **characterized in that** the heating power of the heating device can be switched off during the cooling period of the welded joint and/or interrupted during the milling period in the welding device (2).

11. The device according to claim 7, **characterized in that** the pressure in the hydraulic drive system can during the milling operation be reduced to a pressure below the welding pressure when the pipe sections (10) are moved together.

12. The device according to claim 7, **characterized in that** the displacement of the movable clamping rings (6) can be effected by cylinders (33) that are respectively arranged between two guides (18) for the piston rod (31) and each enclose a piston (35) that respectively can be supplied with hydraulic fluid through one of the hydraulic connections (8) depending on the moving direction.

## Revendications

1. Procédé de soudage de sections tubulaires (10) en matières plastiques pour former des tubes au moyen des sous-ensembles suivants :
a) un dispositif de soudage (2) qui présente un bâti avec quatre bagues de serrage divisées (6) qui forment deux groupes dont chacun reçoit une section tubulaire (10) et dont un groupe est déplaçable par rapport à l'autre à l'aide d'une commande sur des guides (18) depuis un espace initial,
b) un sous-ensemble hydraulique (3) pour actionner la commande du dispositif de soudage (2),
c) un dispositif de fraisage (15) pour fraiser radialement à plat les surfaces de soudage des sections tubulaires (10) qui peuvent être introduites dans l'espace initial entre les sections tubulaires (10) et
d) un dispositif de chauffage bilatéral qui peut, après le fraisage, être introduit entre les sections tubulaires (10) et peut être amené en contact homogène avec les sections tubulaires (10) par la commande hydraulique,
e) les données concernant les produits, les machines, l'environnement, l'heure et les données hydrauliques étant rentrées dans un appareil de commande en réseau (1),
les données spécifiques au procédé pour le soudage étant enregistrées sous forme de valeurs théoriques et de paramètres de procédé mesurés des sous-ensembles précédents a), b), c) et d) en fonction de l'heure et de la valeur dans l'appareil de commande (1) de manière à ce que les fonctions des sous-ensembles cités soit corrélées et affichées après comparaison avec les valeurs théoriques préconisées,
**caractérisé en ce que** la position d'au moins une section tubulaire (10) dans une des bagues de serrage (6) est surveillée par au moins un capteur d'éloignement (16), la valeur de l'espace étant de préférence enregistrée dans une mémoire à protocole et/ou la géométrie tubulaire étant de préférence surveillée par l'au moins un capteur d'éloignement (16).

2. Procédé selon la revendication 1, **caractérisé en ce que** les paramètres suivants sont enregistrés en plus par des capteurs et des emplacements de mémoire : température ambiante, position de la commande hydraulique, diamètre des tubes et vitesse de mouvement des bagues de serrage (6).

3. Procédé selon la revendication 1, **caractérisé en ce que** le dispositif de soudage (2) est équipé d'un convertisseur A/N (17) par l'intermédiaire duquel les paramètres du procédé sont transmis à l'appareil de commande (1).

4. Procédé selon la revendication 1, **caractérisé en ce que** la puissance chauffante pour le dispositif de chauffage est coupée pendant le temps de refroidissement du raccord soudé et/ou pendant la durée du fraisage dans le dispositif de soudage (2).

5. Procédé selon la revendication 1, **caractérisé en ce que** la pression dans le système d'entraînement hydraulique est réduite, pendant l'opération de fraisage, lors du rapprochement des sections tubulaires (10), à une pression inférieure à la pression de soudage.

6. Procédé selon la revendication 1, **caractérisé en ce que** le déplacement des bagues de serrage mobiles (6) est assuré par des vérins (33) qui sont respectivement disposés entre deux guides (18) pour la tige du piston (31) et entourent chacun un piston (35) qui, en fonction du sens de mouvement, est alimenté en liquide hydraulique respectivement par un des raccordements hydrauliques (8).

7. Dispositif de soudage de sections tubulaires (10) en matières plastiques pour former des tubes au moyen des sous-ensembles suivants :
a) un dispositif de soudage (2) qui présente un bâti avec quatre bagues de serrage divisées (6) qui forment deux groupes dont chacun reçoit une section tubulaire (10) et dont un groupe est déplaçable par rapport à l'autre à l'aide d'une commande sur des guides (18) depuis un espace initial,
b) un sous-ensemble hydraulique (3) pour actionner la commande du dispositif de soudage (2),
c) un dispositif de fraisage (15) pour fraiser radialement à plat les surfaces de soudage des sections tubulaires (10) et qui peut être introduit dans l'espace initial entre les sections tubulaires (10) et
d) un dispositif de chauffage bilatéral qui peut, après le fraisage, être introduit dans l'espace entre les sections tubulaires (10) et peut être amené en contact homogène avec les sections tubulaires (10) par la commande hydraulique,
e) les données concernant les produits, les machines, l'environnement, la durée et les données hydrauliques étant rentrées dans un appareil de commande en réseau (1),
les données spécifiques au procédé pour l'opération de soudage pouvant être enregistrées sous forme de valeurs théoriques et de paramètres de procédé mesurés des sous-ensembles précédents a), b), c) et d) en fonction de la durée et de la valeur dans l'appareil de commande (1) de manière à ce que les fonctions des sous-ensembles cités soit corrélées et affichées après comparaison avec les valeurs théoriques préconisées,
**caractérisé en ce qu'**un capteur d'éloignement (16) est disposé au niveau d'au moins une des bagues de serrage (6), la valeur de l'espace pouvant de préférence être enregistrée dans une mémoire à protocole et/ou la géométrie tubulaire pouvant de préférence être détectée par l'au moins un capteur d'éloignement (16).

8. Dispositif selon la revendication 7, **caractérisé en ce que** les paramètres suivants peuvent en plus être détectés et enregistrés par des capteurs et des emplacements de mémoire : température ambiante, position de la commande hydraulique, diamètre des tubes et vitesse de mouvement des bagues de serrage (6) .

9. Dispositif selon la revendication 7, **caractérisé en ce que** le dispositif de soudage (2) est équipé d'un convertisseur A/N (17) par l'intermédiaire duquel les paramètres du procédé peuvent être transmis à l'appareil de commande (1).

10. Dispositif selon la revendication 7, **caractérisé en ce que** la puissance chauffante pour le dispositif de chauffage peut être coupée pendant le temps de refroidissement du raccord soudé et/ou peut être interrompue pendant la durée du fraisage dans le dispositif de soudage (2).

11. Dispositif selon la revendication 7, **caractérisé en ce que** la pression peut être réduite, pendant l'opération de fraisage, lors du rapprochement des sections tubulaires (10), à une pression inférieure à la pression de soudage.

12. Dispositif selon la revendication 7, **caractérisé en ce que** le déplacement des bagues de serrage mobiles (6) peut être assuré par des vérins (33) qui sont respectivement disposés entre deux guides (18) pour la tige du piston (31) et entourent chacun un piston (35) qui, en fonction du sens de mouvement, peut être alimenté en liquide hydraulique respectivement par un des raccordements hydrauliques (8).
